# EUROPÄISCHE PATENTSCHRIFT

(11) **EP 1 466 797 B1**
(45) Veröffentlichungstag und Bekanntmachung des Hinweises auf die Patenterteilung: **26.07.2006**
(21) Anmeldenummer: 04007423.9
(22) Anmeldetag: 26.03.2004
(51) Int. Cl.: B60T 7/06

(54) **Verstellbares Fusshebelwerk**
Adjustable pedal mechanism
Pédalier réglable

(30) Priorität: 08.04.2003 DE 10316309
(43) Veröffentlichungstag der Anmeldung: 13.10.2004
(73) Patentinhaber: ZF Boge Elastmetall GmbH, 49448 Lemförde (DE)
(72) Erfinder: Burgstaler, Andree, 32351 Dielingen (DE); Dütz, Jan, 49401 Damme (DE); Papke, Simone, 49076 Osnabrück (DE)

(56) Entgegenhaltungen:
- DE-A1- 10 026 751
- US-A- 4 875 385
- US-A- 5 078 024
- US-A1- 2003 110 879

## Beschreibung

Die Erfindung betrifft eine Vorrichtung zum Verstellen eines mittels einer Lagereinrichtung drehbar gelagerten Anschlussteils, insbesondere eines Fußhebelwerks in einem Kraftfahrzeug, an das eine Übertragungseinheit zum Übertragen der Bewegung des Anschlussteils gekoppelt ist, umfassend einen Verstellmechanismus zur Verstellung der Position des Anschlussteils, eine Sperreinheit, welche die ungewollte Verstellung der Position des Anschlussteils verhindert und Ausgleichsmittel, zur Kompensation etwaiger durch die Verstellung des Anschlussteils hervorgerufener Positionsänderungen der Übertragungseinheit.

Derartige Vorrichtungen kommen üblicherweise in Kraftfahrzeugen, insbesondere in Personenkraftfahrzeugen, zur Verstellung von Steuerungspedalen wie Brems-, Kupplungs-, und Gaspedalen zum Einsatz. Obwohl sich in Personenkraftfahrzeugen bereits viele Komponenten wie Sitz, Lenkrad etc. individuell entsprechend den Körpermaßen der Bedienperson anpassen lassen, sind Lösungen zur Verstellung eines der am häufigsten benutzten Komponenten des Fahrzeuges - die Pedale - unüblich. Um jedoch eine optimale Anpassung des Fahrzeuges an die individuellen und unterschiedlichen Körpermaße der verschiedenen Fahrer zu gewährleisten, ist es notwendig, auch die Pedale individuell verstellbar, entsprechend ergonomischen Vorstellungen und Richtlinien zu gestalten und damit ein ermüdungsfreies und sichereres Fahren zu gewährleisten. Darüber hinaus ist eine Verstellbarkeit der Pedale auch hinsichtlich eines optimalen Abstandes des Fahrers zum Fahrerairbag sinnvoll.

Aus der Oftenlegungsschrift DE 100 26 751 A1 ist eine Lösung bekannt, bei der die translatorische und/oder rotatorische Verstellung eines hier interessierenden Anschlussteils über einen separaten Verstellmechanismus realisiert wird, wobei separate Ausgleichsmittel die aufgrund der Verstellung des Anschlussteils resultierende Veränderung der Position der Übertragungseinheit im wesentlichen kompensiert.

Bei der bekannten Vorrichtung tritt der Nachteil auf, dass eine Vielzahl von Komponenten beziehungsweise Bauteilen zur Verstellung des Anschlussteils benötigt werden. Insbesondere sind die separaten Ausgleichsmittel aufwendig zu montieren und recht großbauend.

Ferner offenbart die US 4,875,385 ein verstellbares Fußhebelwerk mit einer karosseriefesten ersten Grundplatten, an welcher eine zweite Grundplatte um einen Zapfen schwenkbar angeordnet ist. Auf der zweiten Grundplatte ist ein Anschlussteil in der Ausbildung eines Fußpedals Linear verschiebar angeordnet. Diese Verstellbewegung wird von einem Spindelantrieb, welcher ebenfalls auf der zweiten Grundplatte angeordnet ist, angetrieben. Dabei wird das Anschlussteil in linearen Nuten geführt. Wenn das Anschlussteil vom Bediener betätigt wird, schwenkt das Anschlussteil zusammen mit der zweiten Grundplatte (12) um den Zapfen (32) und betätigt eine Übertragungseinheit (20, 18). Insgesamt baut diese Anordnung insbesondere in Fahrtrichtung sehr groß auf, zudem muss bei jeder Betätigung in nachteiliger Weise die Verstellvorrichtung mit bewegt werden.

Es ist daher die Aufgabe der vorliegenden Erfindung, eine Vorrichtung der vorstehend beschriebenen Art zu schaffen, bei der die Anschlussteile sowohl gemeinsam als auch einzeln, also individuell verstellbar sind, der Verstellmechanismus aufgrund des begrenzten Bauraums möglichst kompakt ausgebildet und einfach zu bedienen ist, wobei die Ausgleichsmittel, die die Position der Übertragungseinheit nach der Verstellung nahezu unverändert belassen sollten, ebenfalls möglichst kompakt und einfach ausgeführt sein sollten.

Diese Aufgabe wird ausgehend von einer Vorrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Der erfindungsgemäße Gegenstand ist eine Vorrichtung zum Verstellen eines mittels einer Lagereinrichtung drehbar gelagerten Anschlussteils, insbesondere eines Fußhebelwerks in einem Kraftfahrzeug, an das eine Übertragungseinheit zum Übertragen der Bewegung des Anschlussteils gekoppelt ist, umfassend einen Verstellmechanismus zur Verstellung der Position des Anschlussteils, eine Sperreinheit, welche die ungewollte Verstellung der Position des Anschlussteils verhindert und Ausgleichsmittel, zur Kompensation etwaiger durch die Verstellung des Anschlussteils hervorgerufener Positionsänderungen der Übertragungseinheit, wobei die Lagereinrichtung eine erste, untere Grundplatte, welche ortsfest angeordnet ist, und eine zweite, obere Grundplatte umfasst sowie einen Verstellmechanismus der eine gelenkige Verbindung der beiden Grundplatten herstellt, wobei die zweite, obere Grundplatte verschwenkbar und kippbar auf der ersten, unteren Grundplatte gelagert ist, und die zweite, obere Grundplatte nach Lösen der Sperreinheit und/oder bei Betätigung einer Antriebseinheit eine Verstellung des in der Lagereinrichtung gelagerten Anschlussteils bewirkt.

Diese Lösung bietet den Vorteil, dass der Verstellmechanismus in der Lagereinrichtung und die Ausgleichsvorrichtung in dem Anschlussteil integriert sind. Auf diese Weise ist gewährleistet, dass kein zusätzlicher Bauraum für separate Komponenten benötigt wird und die Vorrichtung somit äußerst kompakt ausgebildet ist. Damit entfällt zudem ein hoher Montageaufwand, womit letztendlich die Kosten zur Herstellung der Vorrichtung reduziert werden. Die erste Grundplatte ist dabei vorteilhafter Weise ortsfest angeordnet, beispielsweise bei einem Kraftfahrzeug vorzugsweise an dem Fahrzeugchassis.

Das Anschlussteil kann ein Fußpedal eines Kraftfahrzeuges ist. Es ist aber auch denkbar, dass die erfindungsgemäße Vorrichtung im Rahmen anderer Anwendungen eingesetzt wird.

Von besonderem Vorteil ist es, dass die Übertragungseinheit als eine Druckstange ausgebildet ist, welche über einen Bolzen mit dem Anschlussteil verbunden ist und linear in der oberen, zweiten Grundplatte so geführt ist, dass die Druckstange der Bewegung der oberen, zweiten Grundplatte folgt. So ist es möglich, dass die Druckstange optimal gelagert ist, um der Bewegung des Anschlussteils zu folgen.

Eine die Erfindung verbessernde Maßnahme sieht vor, dass das Ausgleichsmittel als ein in dem Anschlussteil ausgeformtes Langloch ausgebildet ist, welches für einen Winkelausgleich zwischen Übertragungseinheit und Anschlussteil sorgt. Auf diese Weise lässt sich ein in dem Anschlussteil integrierte Ausgleichsmittel auf kompakte und kostengünstige Weise realisieren.

Eine weitere, die Erfindung verbessernde Maßnahme sieht vor, dass auf der ersten Grundplatte sowohl ein Anschlussteil als auch mehrere Anschlussteile nebeneinander lagerbar sind. Dadurch kann sowohl jedes Anschlussteil einzeln eingestellt werden, wie es auch möglich ist, sämtliche Anschlussteile gemeinsam zu verstellen.

Vorteilhafter Weise kann die obere, zweite Grundplatte nach Lösen der Sperreinheit manuell und/oder maschinell über eine Antriebseinheit bewegt werden. Auf diese Art lässt sich der Verstellmechanismus sowohl automatisieren als auch im Sicherheitsfall manuell verstellen, womit eine sichere und permanent zur Verfügung stehende Betätigung gewährleistet ist.

Darüber hinaus ist es vorteilhaft, dass die Sperreinheit über eine form- und/oder kraftschlüssige Selbsthemmung der Antriebseinheit realisiert ist. So lässt sich die Sperreinrichtung in der Antriebseinheit integrieren, wodurch die gesamte Vorrichtung wenig Bauraum benötigt.

Eine weiterführende Verbesserung ist, dass die Verstellung der oberen, zweiten Grundplatte über eine Antriebseinheit erfolgt, die entweder direkt über einen Spindelantrieb oder indirekt über einen Spindelantrieb, dem ein Kraftverstärker, beispielsweise ein Keil nachgeschaltet ist, die obere, zweite Grundplatte relativ zur unteren, ersten Grundplatte bewegt. Auf diese Weise bietet sich die Möglichkeit, kleinbauende Stellglieder in die Verstelleinheit zu integrieren, welche auch über eine zentrale Steuerung angetrieben werden können. Die einzelnen Stellglieder lassen sich dabei einzeln oder zusammen ansteuern, so dass die Anschlussteile zusammen oder separat einzeln eingestellt werden können.

Dadurch, dass die Bewegung der oberen, zweiten Grundplatte relativ zur unteren, ersten Grundplatte über eine Drehlagerung erfolgt, wird der Erfolg erzielt, dass ein kleiner Kippmechanismus zwischen den beiden Grundplatten integriert ist, der auf einfache Weise die gewünschte Verstellung des Anschlussteils realisiert.

Weitere die Erfindung verbessernde Maßnahmen sind in den Unteransprüchen angegeben. Weitere vorteilhafte Ausführungsformen sind anhand der Figuren näher erläutert. Es zeigt:
- Figur 1: eine isometrische Ansicht der Vorrichtung zum Verstellen eines mittels einer Lagereinrichtung drehbar gelagerten Anschlussteils,
- Figur 2: eine Seitenansicht der Vorrichtung nach Figur 1,
- Figur 3: eine Draufsicht der Vorrichtung nach Figur 1,
- Figur 4: eine Schnittansicht A-A der Vorrichtung nach Figur 3 und
- Figur 5: eine weitere Schnittansicht B-B der Vorrichtung nach Figur 3.

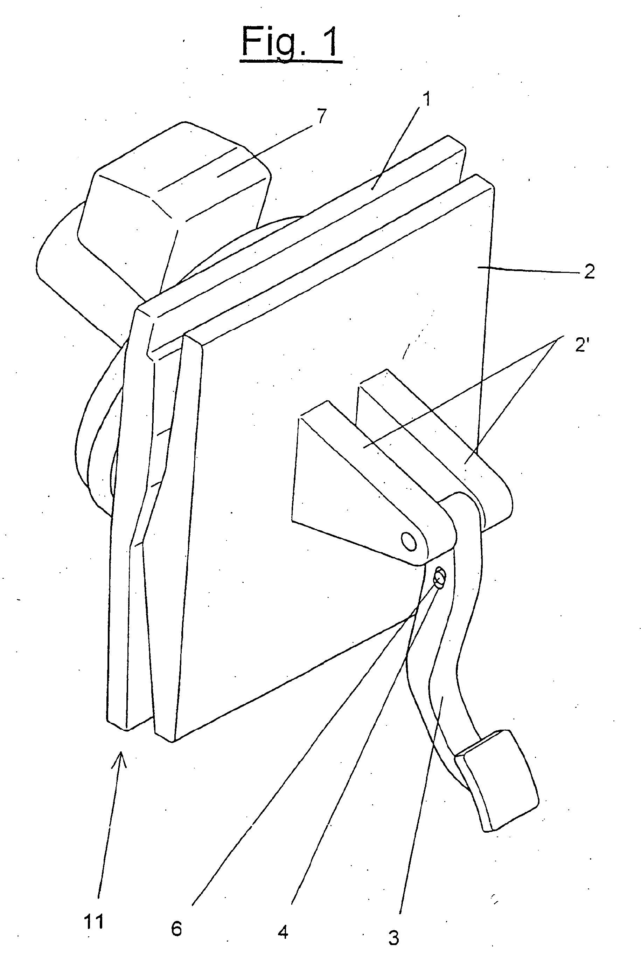

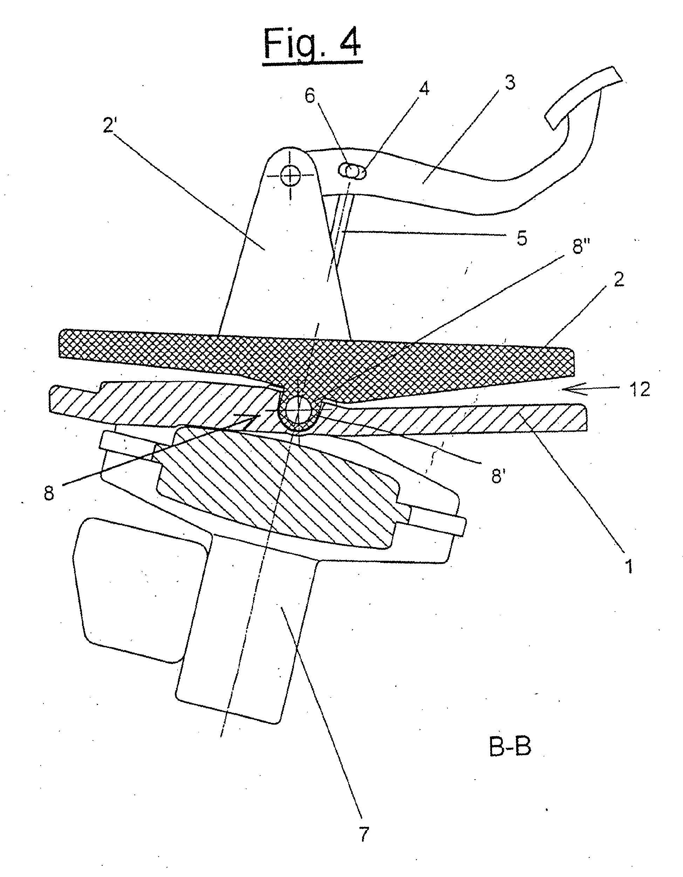

Figur 1 zeigt eine erste, untere Grundplatte 1, auf der sich eine zweite, obere Grundplatte 2 befindet. Die beiden Grundplatten 1, 2 sind miteinander gelenkig verbunden. Die zweite, obere Grundplatte 2 weist zentral zwei beabstandete Erhebungen 2' auf. Zwischen diesen Erhebungen 2' ist das Anschlussteil 3 schwenkbar gelagert. Das Anschlussteil 3 weist integrierte Ausgleichsmittel 4 in Form eines Langloches auf. Mit diesen Ausgleichsmitteln 4 ist die als Druckbolzen ausgebildete Übertragungseinheit 5 (besser erkennbar in Figur 4) über ein, in dem Langloch beweglich gelagertes Verbindungsteil 6, bevorzugt als Bolzen ausgebildet, gekoppelt. Unter der ersten, unteren Grundplatte 1 befindet sich die mit der Übertagungseinheit 5 verbundene Kraftübertragungseinheit 7.

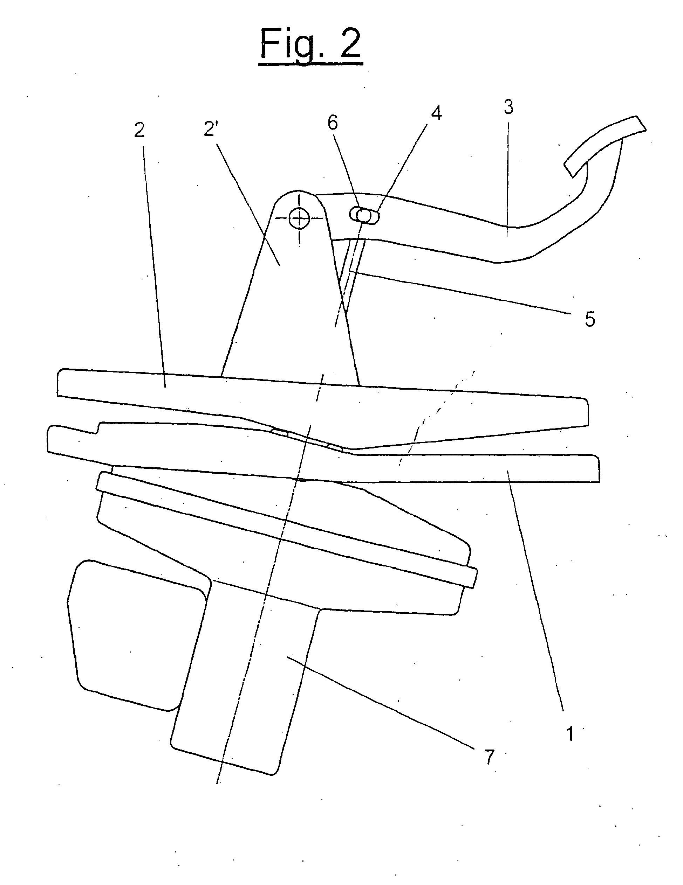

In Figur 2 ist der Aufbau der Vorrichtung seitlich zu sehen. Über der Kraftübertragungseinheit 7 befindet sich die erste, untere Grundplatte 1, auf der die zweite, obere Grundplatte 2 kippbar gelagert ist. Die zweite, obere Grundplatte 2 weist mindestens eine Erhebung 2' zur Lagerung des Anschlussteils 3 auf. Das Anschlussteil 3 ist in einer Ausnehmung der Erhebung 2', vorzugsweise über eine Bolzenverbindung, drehbar gelagert. Zwischen der Kraftübertragungseinheit 7 und dem Anschlussteil 3 ist in Verlängerung der zentral durch die Kraftübertragungseinheit 7 verlaufenden Achse die als Druckbolzen ausgebildete Übertragungseinheit 5 platziert. Die Übertragungseinheit 5 weist ein Verbindungsteil 6 auf, vorzugsweise in Form eines Bolzens, welches fest mit der Übertragungseinheit 5 verbunden ist. Das Verbindungsteil 6 ist in der, in dem Anschlussteil 3 integrierten Ausgleichsmittel 4 beweglich gelagert, sodass die Ausgleichsmittel 4 eine Führung des Verbindungsteiles 6 gewährleisten.

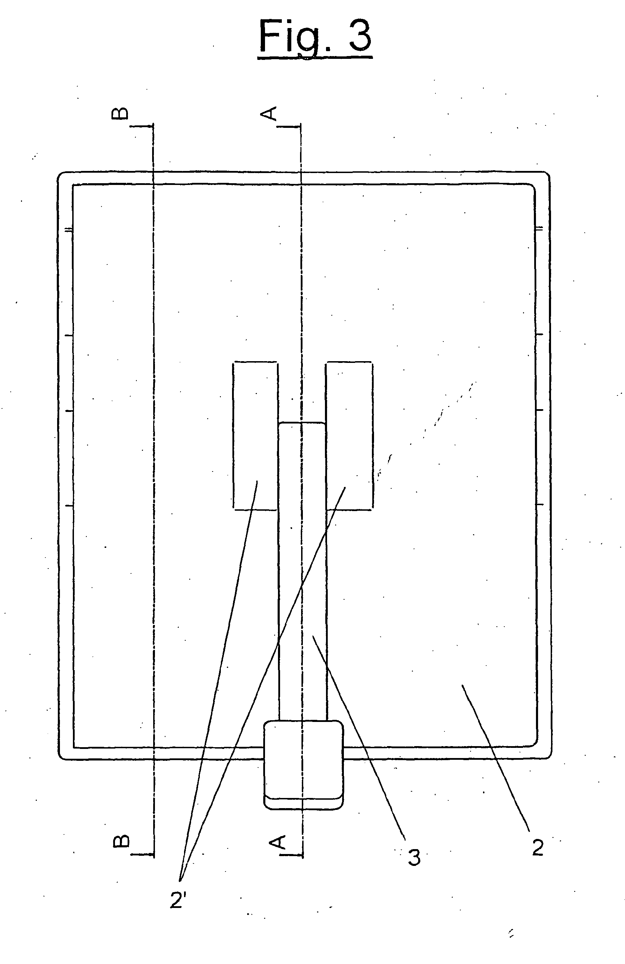

In Figur 3 ist die Anordnung des Anschlussteils 3 zwischen den Erhebungen 2' der zweiten, oberen Grundplatte 2 zu erkennen. Dabei ist das Anschlussteil 3 passgenau zwischen den beiden Erhebungen 2' angeordnet. Die Anordnung der Erhebungen 2' und damit die Lagerung des als Pedal ausgebildeten Anschlussteils 3 ist so realisiert, dass die Bewegung des Anschlussteils 3 bei Betätigung nicht gehemmt, beeinträchtigt oder gehindert ist.

Figur 4 zeigt den in Figur 3 angezogenen Schnitt B-B. Im wesentlichen entspricht die Figur 4 der Darstellung in Figur 2. Jedoch ist in Figur 4 die Verbindung 8 der ersten, unteren Grundplatte 1 und der zweiten, oberen Grundplatte 2 genauer zu erkennen. Die erste, untere Grundplatte 1 weist dabei eine Ausnehmung 8' auf, in der eine Erhebung 8" der zweiten, oberen Grundplatte 2 gelagert ist. Dabei weist die Erhebung 8" der zweiten, oberen Grundplatte 2 eine Bohrung auf und die Ausnehmung 8' der ersten, unteren Grundplatte 1 einen Zapfen. Die Erhebung 8" der zweiten, oberen Grundplatte 2 ist mit der Ausnehmung 8' der ersten, unteren Grundplatte 1 so verbunden, dass die Bohrung der Erhebung 8" der zweiten, oberen Grundplatte 2 den Zapfen der Ausnehmung 8' der ersten, unteren Grundplatte 1 formschlüssig umschließt und zwar so, dass die zweite, obere Grundplatte 2 sich um den Zapfen der Ausnehmung 8' der ersten, unteren Grundplatte 1 bewegen lässt. Begrenzt wird die Bewegung der zweiten, oberen Grundplatte auf beiden Seiten durch die jeweiligen Flächen der Grundplatten 1, 2.

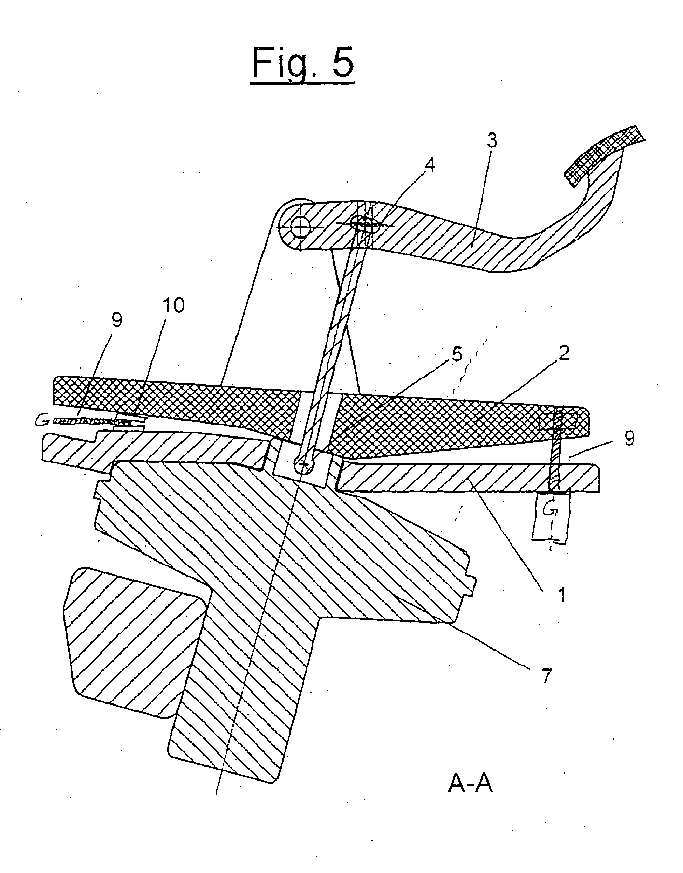

In Figur 5 ist zusätzlich zu Figur 4 die Verbindung der als Druckbolzen ausgebildeten Übertragungseinheit 5 und der Kraftübertragungseinheit 6 sowie zwei Antriebseinheiten 9 zur maschinellen Verstellung der zweiten, oberen Grundplatte 2 und damit des Anschlussteils 3 dargestellt. Die Übertragungseinheit 5 weist auf der der Kraftübertragungseinheit 7 zugewandten Seite ein kugelförmiges Ende auf. Dieses Ende ist in einer Ausnehmung der Kraftübertragungseinheit 7 beweglich gelagert. Um eine entsprechende Bewegung der Übertragungseinheit 5 zuzulassen, weist die zweite, obere Grundplatte 2 eine Ausnehmung in Form einer Bohrung auf. Diese Bohrung gestattet es der Übertragungseinheit 5 der Verstellung der zweiten, oberen Grundplatte 2 im begrenzten Umfang zu folgen. Lateral zwischen den beiden Grundplatten 1, 2 ist beidseitig je eine als Spindeleinheit ausgebildete Antriebseinheit 9 angebracht. Einerseits überträgt die Spindeleinheit die zum Verstellen der zweiten, oberen Grundplatte 2 benötigte Kraft direkt auf die zweite, obere Grundplatte 2, andererseits treibt die als Spindeleinheit ausgebildete Antriebseinheit 9 indirekt einen Kraftverstärker 10, beispielsweise einen Keilmechanismus, an, der die Kraft auf die zweite, obere Grundplatte 2 überträgt.

### Bezugszeichenliste

- **1**: Erste, untere Grundplatte
- **2**: Zweite, obere Grundplatte
- **2'**: Erhebung
- **3**: Anschlussteil
- 4: Ausgleichsmittel
- **5**: Übertragungseinheit
- **6**: Verbindungsteil
- **7**: Kraftübertragungseinheit
- **8**: Verbindung
- **8'**: Ausnehmung
- **8"**: Erhebung
- **9**: Antriebseinheit
- **10**: Kraftverstärker
- **11**: Lagereinrichtung
- **12**: Verstellmechanismus

## Patentansprüche

1. Vorrichtung zum Verstellen eines mittels einer Lagereinrichtung (11) drehbar gelagerten Anschlussteils (3), insbesondere eines Fußhebelwerks in einem Kraftfahrzeug, an das eine Übertragungseinheit (5) zum Übertragen der Bewegung des Anschlussteils (3) gekoppelt ist, umfassend einen Verstellmechanismus (12) zur Verstellung der Position des Anschlussteils (3), eine Sperreinheit, welche die ungewollte Verstellung der Position des Anschlussteils (3) verhindert und Ausgleichsmittel (4), zur Kompensation etwaiger durch die Verstellung des Anschlussteils (3) hervorgerufener Positionsänderungen der Übertragungseinheit (5), **dadurch gekennzeichnet, dass** die Lagereinrichtung (11) eine erste, untere Grundplatte (1), welche ortsfest angeordnet ist, und eine zweite, obere Grundplatte (2) umfasst sowie einen Verstellmechanismus (12) der eine gelenkige Verbindung (8) der beiden Grundplatten (1 und 2) herstellt, wobei die zweite, obere Grundplatte (2) verschwenkbar und kippbar auf der ersten, unteren Grundplatte (1) gelagert ist, und die zweite, obere Grundplatte (2) nach Lösen der Sperreinheit und/oder bei Betätigung einer Antriebseinheit (9) eine Verstellung des in der Lagereinrichtung (11) gelagerten Anschlussteils (3) bewirkt.

2. Vorrichtung nach Anspruch 1, **dadurch gekennzeichnet, dass** das Anschlussteil (3) ein Fußpedal eines Kraftfahrzeuges ist.

3. Vorrichtung nach einem der vorherigen Ansprüche, **dadurch gekennzeichnet, dass** die Übertragungseinheit (5) als eine Druckstange ausgebildet ist, welche über einen Bolzen mit dem Anschlussteil (3) verbunden ist und linear in der oberen, zweiten Grundplatte (2) so linear geführt ist, dass die Druckstange die Bewegung der oberen, zweiten Grundplatte (2) folgt.

4. Vorrichtung nach einem der vorherigen Ansprüche, **dadurch gekennzeichnet, dass** das Ausgleichsmittel (4) als ein in dem Anschlussteil (3) ausgeformtes Langloch ausgebildet ist, welches während der Betätigung für einen Winkelausgleich zwischen Übertragungseinheit (5) und Anschlussteil (3) sorgt.

5. Vorrichtung nach einem der vorherigen Ansprüche, **dadurch gekennzeichnet, dass** auf der zweiten, oberen Grundplatte (2) sowohl ein Anschlussteil (3) als auch mehrere Anschlussteile (3) nebeneinander lagerbar sind.

6. Vorrichtung nach einem der vorherigen Ansprüche, **dadurch gekennzeichnet, dass** auf der ersten, unteren Grundplatte (1) sowohl eine als auch mehrere Grundplatten (2) nebeneinander gelenkig lagerbar sind.

7. Vorrichtung nach einem der vorherigen Ansprüche, **dadurch gekennzeichnet, dass** die obere, zweite Grundplatte (2) nach Lösen der Sperreinheit manuell und/oder maschinell über eine Antriebseinheit (9) bewegbar ist.

8. Vorrichtung nach einem der vorherigen Ansprüche, **dadurch gekennzeichnet, dass** die Sperreinheit über eine form- und/oder kraftschlüssige Selbsthemmung der Antriebseinheit (9) realisiert ist.

9. Vorrichtung nach einem der vorherigen Ansprüche, **dadurch gekennzeichnet, dass** die Verstellung der oberen, zweiten Grundplatte (2) über eine Antriebseinheit (9) erfolgt, die entweder direkt über einen Spindelantrieb oder indirekt über einen Spindelantrieb, dem ein Kraftverstärker (10), beispielsweise ein Keil nachgeschaltet ist, die obere, zweite Grundplatte (2) relativ zur unteren, ersten Grundplatte (1) bewegt.

## Claims

1. Device for adjusting a connecting part (3) rotatably mounted by means of a bearing unit (11), in particular a foot lever system in a motor vehicle, with which a transmission unit (5) for transmitting the movement of the connecting part (3) is coupled, comprising an adjusting mechanism (12) for adjusting the position of the connecting part (3), a locking unit which prevents any undesired adjustment to the position of the connecting part (3) and compensating means (4) to compensate for any changes in the position of the transmission unit (5) caused by the adjustment to the connecting part (3), **characterised in that** the bearing unit (11) comprises a first, bottom base plate (1) disposed so as to be stationary, and a second, top base plate (2), as well as an adjusting mechanism (12) providing an articulated connection (8) between the two base plates (1 and 2), and the second, top base plate (2) is mounted on the first, bottom base plate (1) so that it can pivot and tilt, and when the locking unit is released and/or when a drive unit (9) is activated, the second, top base plate (2) causes an adjustment of the connecting part (3) mounted in the bearing unit (11).

2. Device as claimed in claim 1, **characterised in that** the connecting part (3) is a foot pedal of a motor vehicle.

3. Device as claimed in one of the preceding claims, **characterised in that** the transmission unit (5) is provided in the form of a push rod, which is connected to the connecting part (3) by means of a bolt and is linearly guided in the top, second base plate (2) so that the push rod follows the movement of the top, second base plate (2).

4. Device as claimed in one of the preceding claims, **characterised in that** the compensating means (4) is provided in the form of a slot formed in the connecting part (3) which effects an angular compensation between the transmission unit (5) and connecting part (3) during operation.

5. Device as claimed in one of the preceding claims, **characterised in that** both one connecting part (3) and also several connecting parts (3) adjacent to one another may be mounted on the second, top base plate (2).

6. Device as claimed in one of the preceding claims, **characterised in that** both one as well as several base plates (2) may be articulatingly mounted adjacent to one another on the first, bottom base plate (1).

7. Device as claimed in one of the preceding claims, **characterised in that** the top, second base plate (2) can be moved manually and/or motor-driven via a drive unit (9) when the locking unit is released.

8. Device as claimed in one of the preceding claims, **characterised in that** the locking unit is provided in the form of a positive and/or non-positive self-locking action of the drive unit (9).

9. Device as claimed in one of the preceding claims, **characterised in that** the top, second base plate (2) is adjusted via a drive unit (9) which moves the top, second base plate (2) relative to the bottom, first base plate (1) either directly via a spindle drive or indirectly via a spindle drive, downstream of which a force booster (10), for example a wedge, is connected.

## Revendications

1. Dispositif de réglage d'un élément de raccordement (3) monté de façon pivotante par l'intermédiaire d'un dispositif de palier (11), en particulier pour un pédalier dans un véhicule automobile, auquel est couplée une unité de transmission (5) destinée à transmettre les mouvements de l'élément de raccordement (3), comprenant un mécanisme de réglage (12) permettant' de régler la position de l'élément de raccordement (3), une unité de blocage qui empêche un déréglage involontaire de la position de l'élément de raccordement (3), et des moyens de compensation (4) permettant de compenser d'éventuels changements de position de l'unité de transmission (5) dus au changement de réglage de l'élément de raccordement (3),
**caractérisé en ce que** le dispositif de palier (11) comprend une première plaque d'embase inférieure (1) montée de façon stationnaire, et une seconde plaque d'embase supérieure (2), ainsi qu'un mécanisme de réglage (12) établissant une liaison articulée (8) entre les deux plaques d'embase (1 et 2), la seconde plaque d'embase supérieure (2) étant montée de façon pivotante et basculante sur la première plaque d'embase inférieure (1), et la seconde plaque d'embase supérieure (2) entraînant un changement du réglage de l'élément de raccordement (3) logé dans le dispositif de palier (11) après le déblocage du dispositif de blocage et/ou lors d'un actionnement de l'unité d'entraînement (9).

2. Dispositif selon la revendication 1, **caractérisé en ce que** l'élément de raccordement (3) est une pédale d'un véhicule automobile.

3. Dispositif selon l'une des revendications précédentes, **caractérisé en ce que** l'unité de transmission (5) est réalisée sous forme d'une tige de poussée qui est reliée à l'élément de raccordement (3) par l'intermédiaire d'un axe et est guidée de façon linéaire dans la seconde plaque d'embase supérieure (2) de manière telle que la tige de poussée suive les mouvements de la seconde plaque d'embase supérieure (2).

4. Dispositif selon l'une des revendications précédentes, **caractérisé en ce que** les moyens de compensation (4) sont réalisés sous forme d'un trou oblong ménagé dans l'élément de raccordement (3), trou qui assure une compensation angulaire entre l'unité de transmission (5) et l'élément de raccordement (3) pendant l'actionnement.

5. Dispositif selon l'une des revendications précédentes, **caractérisé en ce qu'**un seul élément de raccordement (3) ou encore plusieurs éléments de raccordement (3) peuvent être montés les uns à côté des autres sur la seconde plaque d'embase supérieure (2).

6. Dispositif selon l'une des revendications précédentes, **caractérisé en ce qu'**une seule plaque d'embase (2) ou encore plusieurs plaques d'embase peuvent être montées de façon pivotante, les unes à côté des autres, sur la première plaque d'embase inférieure (1).

7. Dispositif selon l'une des revendications précédentes, **caractérisé en ce que** la seconde plaque d'embase supérieure (2) peut être déplacée manuellement et/ou mécaniquement, par l'intermédiaire d'une unité d'entraînement (9), après que l'unité de blocage a été débloquée.

8. Dispositif selon l'une des revendications précédentes, **caractérisé en ce que** l'unité de blocage est réalisée sous forme d'un autoblocage de l'unité d'entraînement (9) par couplage des formes et/ou par couplage des forces.

9. Dispositif selon l'une des revendications précédentes, **caractérisé en ce que** le réglage de la seconde plaque d'embase supérieure (2) s'effectue par l'intermédiaire d'une unité d'entraînement (9) qui entraîne la seconde plaque d'embase supérieure (2) par rapport à la première plaque d'embase inférieure (1), soit directement au moyen d'un entraînement à broche filetée, soit indirectement au moyen d'un entraînement à broche filetée auquel est couplé, en aval, un amplificateur d'efforts (10), par exemple un coin.
